# EUROPEAN PATENT APPLICATION

(11) **EP 3 297 367 A1**
(43) Date of publication of application: **21.03.2018**
(21) Application number: 16824457.2
(22) Date of filing: 12.07.2016
(51) Int. Cl.: H04W 72/04

(54) **USER TERMINAL, WIRELESS BASE STATION AND WIRELESS COMMUNICATION METHOD**

(30) Priority: 15.07.2015 JP 2015141243
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); UCHINO, Tooru, Tokyo 100-6150 (JP)
(74) Representative: Hoffmann Eitle
(86) International application number: PCT/JP2016/070531
(87) International publication number: WO 2017/010477

(57) **Abstract**

According to the present invention, appropriate communication can be carried out even if a plurality of services are applied. A user terminal includes a receiving section configured to receive downlink control information (DCI) in regard to transmission and/or reception of a transport block (TB); and a control section configured to control, based on the DCI, transmission and/or reception of a plurality of TBs in the same CC (Component Carrier), the same layer and the same TTI (Transmission Time Interval).

## Description

### Technical Field

The present invention relates to a user terminal, a radio base station and a radio communication method in a next-generation mobile communication system.

### Background Art

In a UMTS (Universal Mobile Telecommunications System) network, long-term evolution (LTE) has been standardized for the purpose of further increasing high-speed data rates and providing low latency, etc. (non-patent literature 1). Furthermore, for the purpose of achieving further broadbandization and higher speed from LTE, successor systems to LTE (e.g., referred to as LTE-A (LTE-Advanced), FRA (Future Radio Access), etc.) have also been studied.

In LTE/LTE-A, technology called link adaption (LA) is implemented, which can change the data modulation scheme, coding rate and TB (Transport Block) size in accordance with the channel quality, etc. By using LA, it becomes possible to appropriately control the data rate in accordance with the service provided to the user.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall description; Stage 2".

### Summary of Invention

### Technical Problem

However, in a future mobile network, there is a need to accommodate various services having different demands into one radio system. Services that are envisaged are, for example: (1) mobile broadband (MBB), (2) massive connectivity, and (3) mission critical.

In MBB, a high frequency-usage efficiency is demanded; in massive connectivity, a capability of accommodating a large number of simple hardware (terminals) is demanded; and in mission critical, high reliability and radio link super-low latency are demanded. Note that mission critical can assumed to be used for an IoT (Internet of Things) service.

However, in conventional LTE/LTE-A systems, only one type of LA can be set per predetermined period of time (e.g., subframe). Accordingly, when LA for one service is applied, if another service is provided, deterioration in transmission quality and reduction in throughput occur, so that communication cannot be appropriately carried out.

The present invention has been devised in view of the above problems, and it is an object of the present invention to provide a user terminal, a radio base station and a radio communication method which can appropriately carry out communication even in the case where a plurality of services are applied.

### Solution to Problem

A user terminal, of an aspect of the present invention, includes a receiving section configured to receive downlink control information (DCI) in regard to transmission and/or reception of a transport block (TB); and a control section configured to control, based on the DCI, transmission and/or reception of a plurality of TBs in the same CC (Component Carrier), the same layer and the same TTI (Transmission Time Interval).

### Advantageous Effects of Invention

According to the present invention, communication can be appropriately carried out even when applied to a plurality of different services.

### Brief Description of Drawings

FIG. 1 is a diagram showing an example of providing a different service per subframe by TDD.
FIG. 2A is a diagram showing an example of resource allocation of a plurality of TBs in method 1 of a first embodiment, and FIG. 2B is a diagram showing another example of resource allocation of a plurality of TBs in method 1 of the first embodiment.
FIG. 3A is a diagram showing an example of resource allocation of a plurality of TBs in method 2 of the first embodiment, and FIG. 3B is a diagram showing another example of resource allocation of a plurality of TBs in method 2 of the first embodiment.
FIG. 4A is a diagram showing an example of resource allocation of a plurality of TBs in a second embodiment, and FIG. 4B is a diagram showing another example of resource allocation of a plurality of TBs in the second embodiment.
FIG. 5A is a diagram showing an example of resources for a downlink HARQ feedback in a third embodiment; and FIG. 5B is a diagram showing another example of resources for a downlink HARQ feedback in the third embodiment.
FIG. 6A is a diagram showing an example of A/N multiplexing for a downlink HARQ feedback in the third embodiment; and FIG. 6B is a diagram showing another example of A/N multiplexing for a downlink HARQ feedback in the third embodiment.
FIG. 7 is a diagram showing an example of a PHICH resource of an uplink HARQ feedback in the fourth embodiment.
FIG. 8A is a diagram showing an example of a DCI configuration in a fourth embodiment; and FIG. 8B is a diagram showing another example of a DCI configuration in the fourth embodiment.
FIG. 9A is a diagram showing an example of a DCI configuration in a fifth embodiment; and FIG. 9B is a diagram showing another example of a DCI configuration in the fifth embodiment.
FIG. 10 is an illustrative diagram of a schematic configuration
of a radio communication system of according to an illustrated embodiment of the present invention.
FIG. 11 is an illustrative diagram showing an overall configuration of a radio base station according to the illustrated embodiment of the present invention.
FIG. 12 is an illustrative diagram of a functional configuration of the radio base station according to the illustrated embodiment of the present invention.
FIG. 13 is an illustrative diagram showing an overall configuration of a user terminal according to the illustrated embodiment of the present invention.
FIG. 14 is an illustrative diagram showing a functional configuration of the user terminal according to the illustrated embodiment of the present invention.

### Description of Embodiments

In an LTE system, an eNB (evolved Node B) schedules the transmission and reception of data to and from a UE (User equipment). The transmission and reception of data is carried out via a PUSCH (Physical Uplink Shared Channel)/PDSCH (Physical Downlink Shared Channel) per unit of TBs.

In LA of an existing LTE system (Rel. 10 through 12), only one type of setting (one TB or one CW (Code Word)) can be used per one TTI (Transmission Time Interval). More specifically, in an existing LTE system, in regard to one layer (one antenna transmission, or data transmitted by one antenna port) of one CC (Component Carrier), only one type of LA setting can be applied per one TTI (one subframe). Although such a configuration is ideal for the case in which only one service is provided by one radio communication system, such a configuration is not desirable in the case where a plurality of services that have different demands are simultaneously provided.

For example, in MBB, under the premise that influence of communication path error is reduced by a retransmission control (e.g., HARQ (Hybrid Automatic Repeat reQuest)), it is desirable for LA to have a maximum frequency usage efficiency. Whereas, in mission critical, since minimum latency is demanded, it is desirable for LA to attain the smallest MCS (Modulation and Coding Scheme) and/or TB size out of a predetermined data rate that can be maintained in order to reduce the probability of HARQ retransmission occurring.

Note that since it is conceivable that it may be desirable to apply different LAs to the same type of service, the plurality of services having different demands may include a plurality of the same type of services (e.g., a plurality of MBBs).

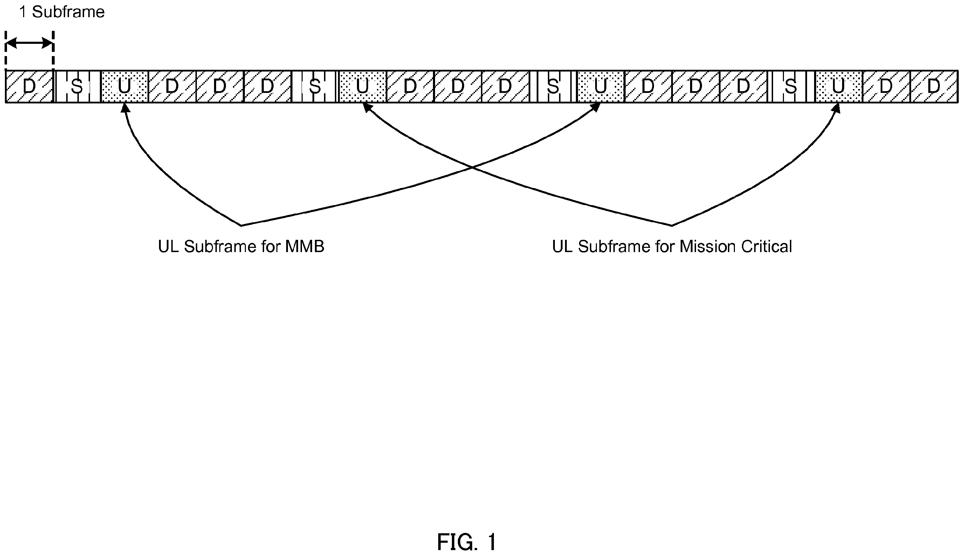

Even in the case where only one type of LA setting can be applied per one subframe, a conceivable method for providing a plurality of services would be to store data for different services per subframe, and perform scheduling so that LAs are separately implemented. However, if such a method is employed, there is a problem with the capability and/or quality of a specific service decreasing. This problem will be described using an example of a system operation that utilizes TDD (Time Division Duplex), with reference to FIG. 1.

FIG. 1 is a diagram showing an example of providing a different service per subframe by TDD. This example shows a subframe configuration of a predetermined interval (20 subframes) in a radio communication system that provides MBB and mission critical services.

In FIG. 1 shows a TDD configuration example (TDD Config. 2) that includes two UL subframes within ten subframes. For example, in regard to a case where, in each radio frame, a UL in subframe #2 is used for an MBB service and a UL in subframe #7 is used for a mission critical service, if the allocation of UL subframes are divided in this manner into use for an MBB service and use for a mission critical service, the UL throughput for each of these services is reduced to 50%.

In regard to a mission critical service, since importance is not placed on throughput, a reduction in service quality is not prominent; however, in regard to an MBB service, since importance is placed on throughput, a reduction in service quality becomes a problem.

As discussed above, in an existing LTE system, if an LA for one of the services is applied to an UE, in the case where another service is provided to the UE, deterioration in communication quality and a reduction in throughput occur, so that communication cannot be appropriately carried out.

Consequently, the inventors of the present invention conceived the idea of transmitting and receiving a plurality of TBs to and from a predetermined UE in one TTI. Furthermore, the inventors of the present invention also discovered a control method for a UE/eNB, and also discovered signaling that should be notified therefor in order to achieve this conceived idea.

Hereinbelow embodiments pertaining to the present invention will be described. In each embodiment, unless stated otherwise, a plurality of TBs will be described as being allocated (transmitted and/or received) in the same CC (cell), the same layer and the same TTI, however, the present invention is not limited thereto; for example, it is possible to apply the present invention even if at least one of the CC, the layer and TTI is different.

### (Radio Communication Method)

### <First Embodiment: Scheduling Plurality of TBs with Plurality of DCIs>

In the first embodiment of the present invention, an eNB schedules a plurality TBs allocated in the same TTI using a plurality of L1/L2 control signals (e.g., referred to as "DCIs" (Downlink Control Information)) including information (scheduling information) corresponding to the different TBs, respectively. The plurality of DCIs may be configured with different DCI formats, or may be configured with the same DCI format. Furthermore, the plurality of DCIs may be referred to as UL grants, DL assignments, etc.

The UE blind detects a plurality of DCIs, for scheduling a plurality of TBs that are received in the same layer of the same CC, and controls the transmission and reception processes of the plurality of TBs based on the detected plurality of DCIs. The UE can determine the TB related to each DCI by an identifier (e.g., an RNTI (Radio Network Temporary Identifier), the payload size (bit length, TB size), a predetermined field or a combination thereof.

For example, the plurality of DCIs may be masked with a separate (different) RNTI per TB. In such a case, by aligning the payload size of the DCI format, it becomes possible to detect each DCI format by distinguishing the RNTI by trialing an assumed blind detection of the payload size. Accordingly, it is possible to suppress an increase in the number of blind detections. Note that the RNTI may be an RNTI that is used in an existing LTE system (e.g., C-RNTI (Cell RNTI), etc.), or a newly prescribed RNTI, and may be referred to as "TB-RNTI" (Transport Block Radio Network Temporary Identifier).

In the case where a plurality of RNTIs are set for detecting a plurality of DCI formats, the UE trials a plurality of DCI format detections, having the same payload size and different RNTIs; and if a plurality of RNTIs are not set for detecting a plurality of DCI formats, the UE trials DCI format detections that are masked by a single RNTI. The plurality of RNTIs may have different lengths; for example, a first RNTI may have a 16 bit length and a second RNTI may have a 24 bit length. By increasing the number of bits in an RNTI, the number of RNTIs that can be allocated to the user increases, so that it becomes possible to achieve massive connectivity required in IoT, etc. Note that the UE may report, in advance, the number of bits of the RNTI, to which the UE corresponds to (is capable), to the radio base station as terminal capability information (UE capability).

Furthermore, the plurality of DCIs may have separate (different) payload sizes per TB. In such a case, since each respective DCI format can be detected by a blind detection trial at each payload size, two RNTIs, which are limited in number, do not need to be used. Accordingly, a larger number of UEs can be scheduled. In the case where detections of a plurality of DCI formats having different payloads are set, the UE trials a plurality of DCI format detections, which are masked by the same RNTI and have different payload lengths; and in the case where detections of a plurality of DCI formats having different payloads are not set, the UE trials DCI format detections while assuming that they are masked by a single RNTI.

Furthermore, a plurality of DCIs may include fields that indicate TBs that are subject to scheduling. In such a case, if each DCI format is configured to have the same payload size, an increase in the number of trials for blind detection can be suppressed. Furthermore, if each DCI format is configured to have the same RNTI is allocated thereto, two RNTIs, which are limited in number, do not need to be used.

In such a case, information that indicates which TB corresponds to which value of a specified bit field included in a DCI may be notified, in advance, to the UE by higher layer signaling, and so on. The UE trials a blind detection on a DCI that assumes a specified payload size, and confirms the specified bit field value of a DCI in which the CRC (Cyclic Redundancy Check) has been successfully descrambled. Thereafter, TB data corresponding to the predetermined bit field value is transmitted and received.

Note that the mapping of each TB to the bit field values is achieved by using the following methods: (1) determining whether information that indicates which bit field value each TB corresponds to can be included in data of the decoding result of each TB, (2) determining whether information that indicates which bit field value each TB corresponds to can be included in MAC CE (Medium Access Control Control-Element) of each TB, or (3) whether the TB payload is allocated numbers in ascending order from the smallest value TB#0, TB#1, ... If method (1) is used, which DCI corresponds to which TB can be appropriately identified at the time at which the UE completes the decoding. If method (2) is used, which DCI corresponds to which TB can be identified without consuming a payload of data for designating by an MAC CE. If method (3) is used, the overhead for notifying the mapping between the DCIs and the TBs can be set to zero.

Note that the fields that indicate the TBs that are subject to scheduling may be new bit fields which are not prescribed in conventional LTE/LTE-A systems, or can be read from existing bit fields. For example, a CIF (Carrier Indicator Field), which uses cross-carrier scheduling, may be used as an existing bit field. For example, a specific value of a CIF (e.g., "01") may be used as a value that indicates TB1, and another value (e.g., "10") may be used as a value that indicates TB2. Note that a field other than a CIF can be read and used.

Furthermore, the UE may be notified, in advance, by higher layer signaling (e.g., RRC signaling, or broadcast information, etc.), or recognize in advance (e.g., may determine via notification of other information), transmission and/or reception of a plurality of TBs in the same layer of the same CC in the same TTI.

Furthermore, the UE may be notified, in advance, by higher signaling (e.g., RRC signaling, or broadcast information, etc.), or recognize in advance (e.g., may determine via notification of other information), of necessary settings for transmission and/or reception of a plurality of TBs in the same layer of the same CC in the same TTI. These necessary settings may be, e.g., information regarding the corresponding relationship between the RNTIs and the TBs, information regarding the corresponding relationship between the payload sizes and the TBs, or information regarding the corresponding relationship between the fields included in the DCIs and the TBs, etc.

In the first embodiment, LAs are respectively applied to each TB, and resource (e.g., PRB (Physical Resource Block) allocation is also carried out separately. The first embodiment falls into two categories depending on the relationship between the TBs and the resource mapping rules. Note that the resource mapping rules refers to, e.g., rules for determining parameters (TTI length, number of subcarriers or number of PRBs) that are used in resource allocation.

In method 1 of the first embodiment, resource mapping rules that are the same as (or similar to) those in an existing LTE are applied to all of the TBs. For example, in regard to the downlink, all of the TBs are mapped (scheduled), using one PRB as a minimum unit, to 1ms TTIs (DL subframes) and/or to DwPTSs (Downlink Pilot Time Slots) included in 1ms TTIs (special subframe) in the same manner as in an existing LTE. Each TB is demodulated based on a reference signal, such as a CRS (Cell-specific Reference Signal) or a DMRS (DeModulation Reference Signal). Note that which of the reference signals to use can be determined based on a transmission mode.

Furthermore, priorities may be prescribed for the TBs. In such a case, when predetermined conditions are satisfied, the UE and/or eNB may perform a control to prioritize the transmission and/or reception of (e.g., by directly transmitting and/or receiving) a TB that has a higher priority. Furthermore, a control can be performed to drop, puncture or rate-match a TB that has a lower priority.

The priorities of TBs may be prescribed (determined) in accordance with higher layer setting information of each TB, or may be set by a separate higher layer signaling. Note that a bearer type (e.g., an audio communication bearer, or a data communication bearer), or a service type (e.g., MBB or IoT) provided by the TB may be used as higher layer setting information; wherein service type may be referred to as "TB type".

The above-described predetermined conditions for applying dropping, puncturing or rate matching may be, for example, conditions in regard to the TB resources, transmission power and size, etc., and can be either one of the following: (1) the case where resource (PRB) allocation of both TBs overlap, (2) the case where the total transmission power allocated to both TBs exceeds the maximum permitted transmission power of the CC, and (3) the case where the total TB size of both TBs exceeds the soft buffer capacity of the UE. Note that the predetermined conditions are not limited thereto.

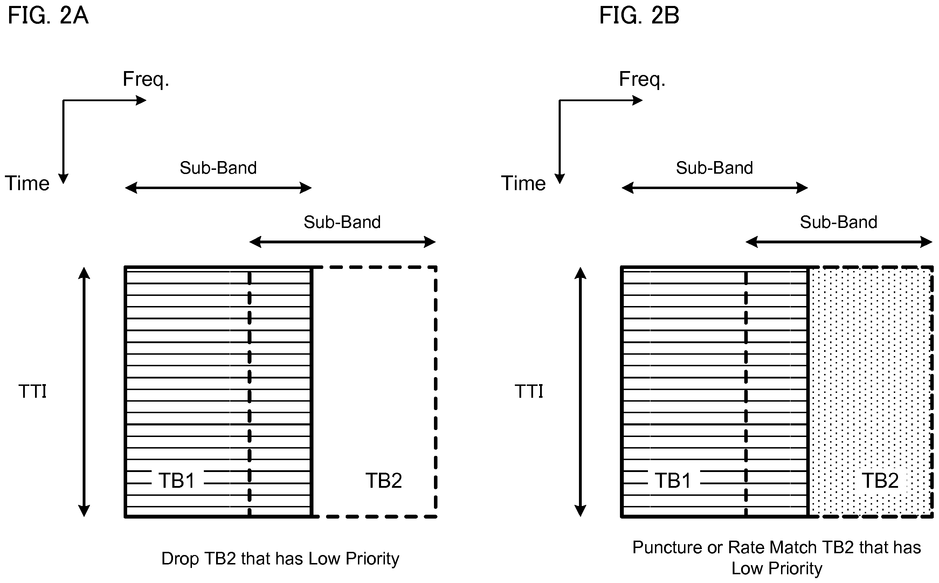

FIG. 2 shows diagrams of an example of resource allocation of a plurality of TBs in method 1 of the first embodiment. FIG. 2 shows an example of part of the resource allocations of TB1 and TB2, which has a lower priority than that of TB1, overlap each other in a TTI. Note that each TB may be configured by an arbitrary sub-band width (e.g., by an arbitrary number of PRBs), may respectively have different sub-band widths, or may have the same sub-band width.

In the case where the resource allocations of a plurality of TBs overlap, the present examples show the case where TB2 having a lower priority is dropped (FIG. 2A), and the case where TB2 having a lower priority is punctured or rate-matched (FIG. 2B). The UE first determines whether or not the scheduling results of the plurality of TBs overlap, and if the scheduling results do overlap, an additional process is carried out on the TB that has a lower priority. In the case of FIG. 2A (dropping), the transmission and/or reception of the TB that has a lower priority is stopped. In the case of FIG. 2B (puncturing or rate matching), the TB1 is transmitted or received without consideration of the TB2 that has a lower priority, and the symbols of the resources that overlap with the TB1 are replaced with zeros (puncturing), or the resources that do not overlap with TB1 are searched and a code rate adjustment (rate matching) is carried out only on data that is to be transmitted or received that matches with the resource amount.

In method 2 of the first embodiment, a resource mapping rule that is different to that in an existing LTE is applied to at least one TB. In other words, a different resource mapping rule may be used for each TB. A TB, to which a resource mapping rule that is different to that in an existing LTE is applied, may be demodulated based on a CRS or a DMRS in the same manner as in an existing LTE, or may be demodulated based on a signal that is different to the reference signals of an existing LTE. Note that the signal to use can be determined based on, e.g., a transmission mode.

A rule which applies a mapping that increases the data resource amount to a TB for large volume and/or high-speed communication and applies mapping that increases an RS (Reference Signal) resource amount to a TB for low latency and/or high reliability may be employed as a resource mapping rule that is different to that of an existing LTE. Furthermore, in such a rule, the length of a data transmission section (TTI) for a predetermined TB may be different to a TTI of an existing LTE.

Furthermore, similar to the above-described method 1, in the case where a priority is prescribed to the TBs, under predetermined conditions, the UE and/or eNB may perform a control to prioritize the transmission and/or reception of (e.g., by directly transmitting and/or receiving) a TB that has a higher priority. In such a case, a control can be performed to drop, puncture or rate-match a TB that has a lower priority.

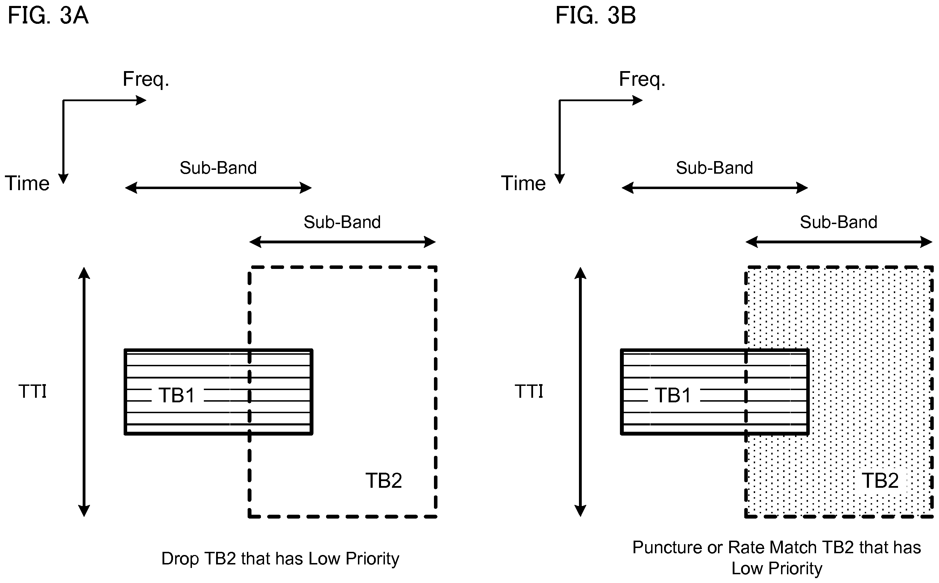

FIG. 3 shows diagrams of an example of resource allocation of a plurality of TBs in method 2 of the first embodiment. FIG. 3 is an example similar to that of FIG. 2 except for TB1 having a shorter TTI than that of TB2. In the case where the resource allocations of a plurality of TBs overlap, the present examples show the case where TB2 having a lower priority is dropped (FIG. 3A), and the case where TB2 having a lower priority is punctured or rate-matched (FIG. 3B).

In the case where resource mapping rules having different data transmission section (TTI) lengths are used, e.g., the resource amount can be increased by lengthening the TTI of a TB for large volume and/or high-speed communication, and delay of demodulation/decoding can be shortened by shortening the TTI of a TB for low latency and/or high reliability. Furthermore, if the priority of a TB for large volume communication is set low and if this low priority TB is punctured or rate-matched, influence on the TB for low latency when puncturing or rate-matching occurs can be suppressed.

Note that information regarding a resource mapping rule of a predetermined TB (e.g., TTI length, number of sub-carriers, etc.) may be notified to the UE via higher layer signaling; the UE may renew the resource mapping rule of the predetermined TB based on this information.

According to the first embodiment, one UE can be controlled to transmit and receive a PUSCH/PDSCH in one TTI that is separately allocated to a plurality of UEs, in a conventional LTE system, by scheduling a plurality of TBs using separate DCIs. Accordingly, a plurality of services can be simultaneously provided with appropriate communication quality.

### <Second Embodiment: Scheduling Plurality of TBs with One DCI>

In the second embodiment of the present invention, an eNB schedules a plurality TBs allocated in the same TTI using one DCI that includes a plurality of information corresponding to the different TBs. In other words, the DCI includes scheduling information for each TB.

The UE blind detects one DCI, for scheduling a plurality of TBs that are received in the same layer of the same CC, and controls the transmission and reception processes of the plurality of TBs based on the detected one DCI. Note that, as described in the first embodiment, the same resource mapping rule may be applied to the plurality of TBs or different resource mapping rules may be applied to the plurality of TBs.

In the second embodiment, a predetermined TB may be mapped by being embedded in a resource for another TB. For example, a resource for a predetermined TB may be mapped to be inserted in a resource for another TB within a frequency and/or time axis, or may be mapped to be dispersed in a resource for another TB within a frequency and/or time axis. Furthermore, in the second embodiment, a resource for a predetermined TB may be mapped to protrude from a resource for another TB.

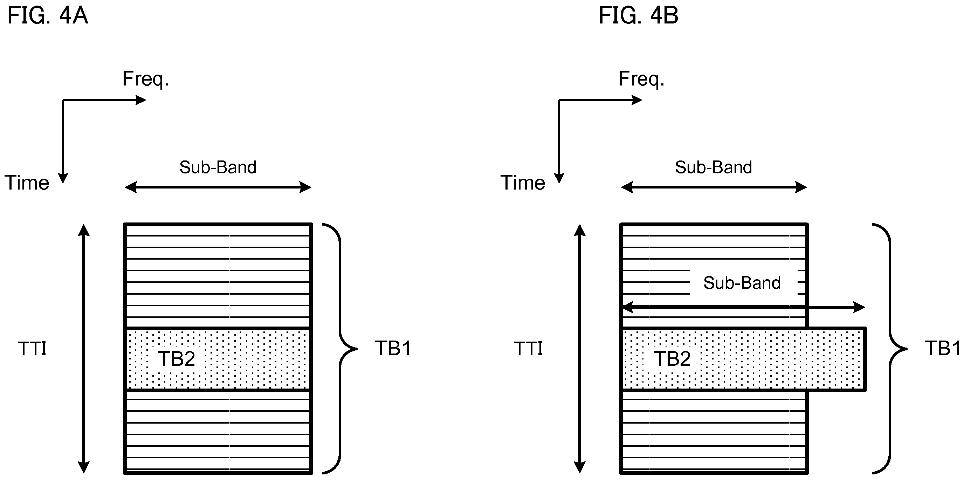

FIG. 4 shows diagrams of an example of resource allocation of a plurality of TBs in the second embodiment. In FIG. 4A, the resource of TB2 is mapped so as to be embedded within the resource of the TB1 along the time axis while having the same sub-band as that of TB1.

In FIG. 4, resource mapping for TB1, having a larger resource, is first instructed by the DCI for scheduling TB1 and TB2. Furthermore, this DCI notifies information which indicates which range out of the resource for the TB1 is mapped for the TB2. For example, this DCI may include information regarding the starting symbol position of the resource for the TB2, the starting PRB index, and the bandwidth of the resource for the TB2.

Furthermore, in regard to the resource for the TB1 and the resource for the TB2, LA information (e.g., MCS, Rank, etc.) may be different, and LA information for each TB may be included in a DCI. Note that LA information for one TB may be configured from differential information based on LA information of another TB.

Furthermore, as shown in FIG. 4B, the resource for the TB2 may protrude from the resource domain of the TB1 (e.g., time and/or frequency domain). Furthermore, the resource for the TB2 may be smaller than the resource domain of the TB1 (e.g., time and/or frequency domain).

According to the second embodiment, by scheduling a plurality of TBs using one DCI, complexity of blind detection can be reduced while providing a plurality of services simultaneously with appropriate communication quality.

### <Third Embodiment: Downlink HARQ>

As described in the above first and second embodiments, in the case where different LAs are carried out for each of a plurality of TBs, the inventors of the present invention discovered that it is desirable to carry out separate HARQ control even when scheduling for the same TTI. The third embodiment describes a downlink HARQ control; an uplink HARQ control is described later in a fourth embodiment.

The third embodiment relates to a downlink HARQ control. Specifically, in the third embodiment, the UE generates respective HARQ-ACK (Acknowledgement) bits in regard to reception of a PDSCH corresponding to a plurality of TBs, and feeds back via an uplink channel (e.g., a PUCCH/PUSCH).

For example, the UE may carry out feedback based on HARQ-ACK feedback for a plurality of Ranks when applying MIMO (Multi Input Multi Output) in an existing LTE system. In such a case, QPSK (Quadrature Phase Shift Keying) modulation is carried out on the HARQ-ACKs of respective TBs, and each HARQ-ACK is transmitted on a PUCCH or a PUSCH.

Furthermore, the UE may carry out feedback based on a HARQ-ACK feedback method for a plurality of CCs when carrier aggregation (CA) is applied in an existing LTE system. In such a case, the UE transmits a HARQ-ACK for each TB using PUCCH format 1b with channel selection, PUCCH format 3, a new PUCCH format prescribed by Rel. 13 CA, or by using a PUSCH.

Note that the new PUCCH format is a PUCCH format which can transmit a large number of bits, and may be referred to as PUCCH format 4, large-volume PUCCH format, enhanced PUCCH format, or new format, etc. For example, the new PUCCH format is configured to be able to store HARQ-ACKs having a maximum of a predetermined number of bits (e.g., 128 bits).

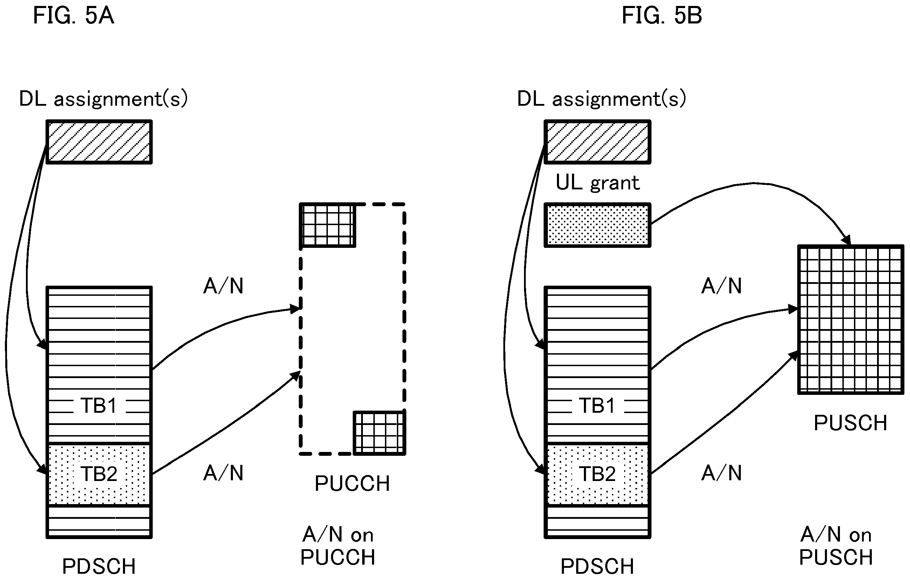

FIG. 5 shows an example of resources for downlink HARQ feedback according to the third embodiment. FIG. 5A and FIG. 5B show the case where downlink HARQ feedback is performed using a PUCCH and using a PUSCH, respectively. Note that in FIG. 5, two TBs (TB1, TB2) are scheduled using one or two DCIs (DL assignment(s)), in the same manner shown in the second embodiment.

In FIG. 5A, an A/N (ACK/NACK) of the TB1 and an A/N of the TB2 are transmitted using one of the above-described PUCCH formats. In FIG. 5B, the A/N of the TB1 and the A/N of the TB2 are transmitted using a resource that is designated by a separate UL grant. In FIG. 5B, there is one uplink TB, and the PUSCH that transmits a plurality of A/Ns is designated by one UL grant.

In the case where a plurality of DCIs allocate different TBs, as shown in the first embodiment, a TPC (Transmit Power Control) command bit (TPC field) included in each DCI can be utilized in the following manner: (1) a TPC command bit included in a DCI that allocates a specified TB of a PCell (Primary Cell) is used in a power control of a PUCCH; and (2) a TPC command bit included in a DCI that allocates a TB other than a specified TB of a PCell (Primary Cell) is interpreted as an ARI (ACK/NACK Resource Indicator) and is used in the same manner as a TPC command bit included in a DCI that allocates a TB of an SCell (Secondary Cell).

In the case where one DCI allocates a plurality of TBs, as shown in the second embodiment, a TPC command bit (TPC field) included in such a DCI may be used as a PUCCH TPC command. In this case, the PUCCH resource may be determined based on information (ARI) separately included in the DCI, or may be determined based on information that is separately notified by higher layer signaling.

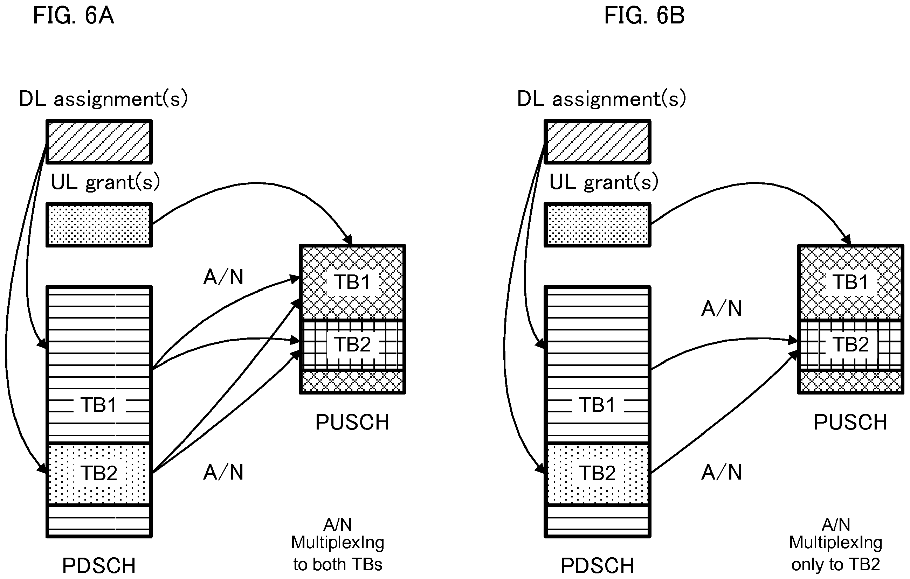

In the case where a plurality of TBs are set in the uplink, the UE may multiplex a UCI (Uplink Control Information), such as a HARQ-ACK, SR (Scheduling Request), CSI (Channel State Information), etc., with a plurality of TBs, or with only one TB. In this regard, a description will be given with reference to FIG. 6.

FIG. 6 shows an example of A/N multiplexing of a downlink HARQ-ACK feedback according to the third embodiment. In FIG. 6, similar to FIG. 5B, an example of HARQ feedback using PUSCH is shown; however, this example differs by also having two uplink TBs, and by a plurality of PUSCHs being scheduled by one or a plurality of UL grants.

In FIG. 6A, both of the A/N of the TB1 and the A/N of the TB2 are transmitted by respectively being included in a PUSCH that corresponds to a plurality of TBs. In the case where the plurality of TBs are multiplexed with a UCI in this manner, since multiplexing can be carried out in, e.g., two different LA sequences, a diversity effect can be obtained.

In FIG. 6B, both of the A/N of the TB1 and the A/N of the TB2 are transmitted by being included in a PUSCH that corresponds to one TB (TB2 in FIG. 6). In this manner, in the case where a UCI is multiplexed with only one TB, since there is no need to decimate the other TB data and the coding gain does not need to be changed, the uplink signal quality (e.g., data quality of a mission critical service) transmitted by another TB (TB1 in FIG. 6) can be maintained. Note that which TB to multiplex a UCI can be determined based on a predetermined rule, and can be determined in accordance with, e.g., TB priority, as described in the first embodiment.

According to the third embodiment, a downlink HARQ control of each TB can be appropriately carried out even in the case where a plurality of TBs are transmitted and received within a predetermined interval.

### <Fourth Embodiment: Uplink HARQ>

The fourth embodiment relates to an uplink HARQ control. Specifically, in the fourth embodiment, the eNB instructs the retransmission/new data transmission of TBs for uplink data transmitted from the UE in each TB via a PHICH (Physical Hybrid-ARQ Indicator Channel) or PDCCH (Physical Downlink Control Channel)/EPDCCH (Enhanced PDCCH).

In the fourth embodiment, the UE may receive a HARQ-ACK bit for each TB in a PHICH. Conventionally, since a PHICH resource is determined by a data allocation resource (and a DMRS sequence index), in the case where a resource allocation of a predetermined TB is embedded into a resource of another TB, as described in the second embodiment, the PHICH resource collides between the TBs. In order to suppress such a collision, a PHICH resource which receives an HARQ-ACK bit of a predetermined TB may be calculated by adding a predetermined offset to the conventional PHICH resource calculation formula.

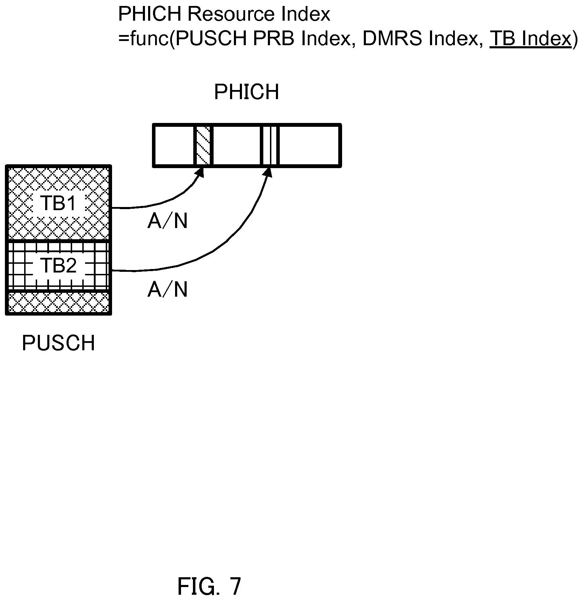

FIG. 7 shows an example of PHICH resources for uplink HARQ feedback according to the fourth embodiment. Note that FIG. 7 shows an example in which the eNB transmits two HARQ-ACKs in the PHICH resources for the PUSCH of two TBs (TB1 and TB2).

In FIG. 7, the (index of the) PHICH resource is obtained by a TB index function in addition to a PUCSH PRB number (index) and a DMRS index; wherein the TB index is a TB specific number, e.g., TB1 is "1" and TB2 is "2". Information related to a TB index for a predetermined TB may be notified by a DCI that instructs the scheduling of the TB, or may be notified via higher layer signaling.

By using such a function, as described above, even in the case of resource allocation of the PUSCH for TB2 is embedded into the resource of the PUSCH for TB1, as in FIG. 7, the PHICH resources for both TBs can be differentiated.

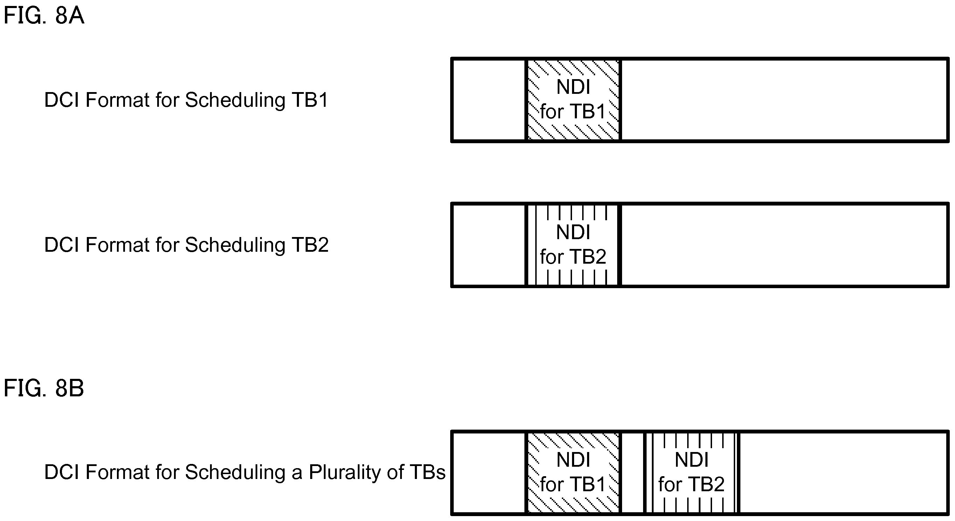

Furthermore, in the fourth embodiment, the UE may receive retransmission/new data instructions for each TB via a PDCCH/EPCCH. FIG. 8 shows an example configuration of a DCI according to the fourth embodiment.

In the case where a plurality of DCIs allocate different TBs, as described in the first embodiment, an NDI (New Data Indicator) that indicates whether the corresponding TB allocation is retransmission data or new data may be included in the DCI. In FIG. 8A, an NDI for the TB1 PUSCH is included in the DCI (UL grant) for scheduling the TB1, and an NDI for the TB2 PUSCH is included in the DCI (UL grant) for scheduling the TB2.

In the case where one DCI allocates a plurality of TBs, as described in the second embodiment, NDIs that indicate whether the TB allocation is retransmission data or new data may be included in the DCI by the same number as the number of the plurality of TBs. In other words, NDIs for different TBs are indicated at different bit fields included in the DCI. In FIG. 8B, an NDI for the TB1 PUSCH and an NDI for the TB2 PUSCH are included in the DCI for scheduling the TB1 and TB2.

Note that the HARQ feedback is not limited to the transmission of either of the above-described PHICH or PDCCH/EPDCCH; both may be utilized.

According to the fourth embodiment, an uplink HARQ control of each TB can be appropriately carried out even in the case where a plurality of TBs are transmitted and received within a predetermined interval.

### <Fifth Embodiment: Uplink TPC>

The fifth embodiment relates to an uplink TPC control. Specifically, in the fifth embodiment, the eNB notifies the TPC command for each TB by the PUSCH by which the UE transmits at each TB, and the UE implements a transmission power control of each TB using a corresponding TPC command.

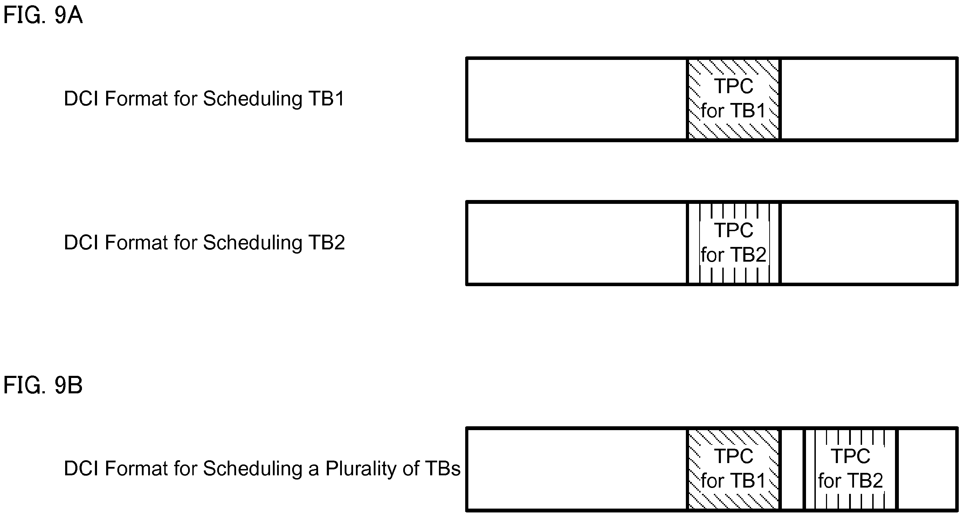

FIG. 9 shows an example of DCI configurations according to the fifth embodiment. In the case where a plurality of DCIs allocate different TBs, as described in the first embodiment, a TPC command bit for allocation of a corresponding TB can be included in each DCI. In such a case, the UE carries out a transmission power control using a TPC command that is included in a respective DCI. In FIG. 9A, a TPC for a TB1 PUSCH is included in a DCI (UL grant) for scheduling the TB1, and a TPC for a TB2 PUSCH is included in a DCI (UL grant) for scheduling the TB2.

In the case where one DCI allocates a plurality of TBs, as described in the second embodiment, a TPC for TB allocation can be included in the DCI by the same number as the number of the plurality of TBs. In other words, TPCs for different TBs are indicated at different bit fields included in the DCI. In FIG. 9B, a TPC for the TB1 PUSCH and a TPC for the TB2 PUSCH are included in the DCI for scheduling the TB1 and TB2.

Note that in the TTI by which the plurality of TBs are transmitted, the UE may obtain a PHR (Power Headroom Report) notified to the eNB based on one TB, based on two or more TBs or with consideration of all the TBs. Since the eNB knows the allocations of all the TBs, sometimes it is sufficient to perform a calculation based on one TB.

The TB(s) that is used in the calculation of a PHR may be, e.g., selected form one or a combination of the following: (1) the TB size, (2) the amount of transmission power, and (3) the TB type. In the case where a TB is selected based on (1), since there is a high probability that a large sized TB has a large transmission power, by obtaining a PHR with a large TB, excess power can be precisely discerned. In the case where a TB is selected based on (2), by obtaining a PHR with a TB that has a large transmission power, excess power can be precisely discerned. In the case where a TB is selected based on (3), by obtaining a PHR with a TB in which importance is placed on ensured quality (e.g., for a mission critical service), it becomes easy to ensure quality.

According to the fifth embodiment, a TPC uplink control of each TB can be appropriately carried out even in the case where a plurality of TBs are transmitted and received within a predetermined interval.

### <Modified Embodiments>

Note that in each above-described embodiment, a configuration is disclosed in which a plurality of TBs are transmitted and received in one TTI (one subframe) having a predetermined interval, however, the present invention is not limited to such an application. For example, the present invention may be applied to a radio communication system in which a TTI is used that has a shorter interval (shortened TTI) than one TTI of an existing LTE system, or in which a TTI is used that has a longer interval (super subframe) than one TTI of an existing LTE system, and transmits and receives a plurality of TBs at a shorter/longer interval than that of an existing TTI (subframe).

Furthermore, an example is disclosed in each embodiment of transmission and reception of two TBs in a predetermined interval, however, the number of TBs to be transmitted and received in a predetermined interval can be an arbitrary number of two or more.

Furthermore, in each embodiment, a data channel (e.g., a PDSCH/PUSCH) corresponding to each TB may be allocated in the same subframe (same-subframe scheduling) as the control channel (e.g., a PDCCH/EPDCCH) included in the DCI that schedules the TB(s), or may be allocated in a different subframe (cross-subframe scheduling).

Furthermore, in the first embodiment, the number of DCIs that schedule the TBs may be detected in the same TTI or detected in different TTIs.

Furthermore, the LA that is applied to the uplink and the downlink may be the same or different. For example, in the case where an LA for MBB and an LA for IoT are set to two downlink TBs, two LAs, i.e., an LA for MBB and an LA for IoT may be set to an uplink TB, or an LA for MBB may be set to the uplink TB, or an LA for mission critical may be set to the uplink TB.

Furthermore, the UE may notify the eNB of terminal capability information (UE capability), which indicates that a plurality of TBs can be transmitted and/or received in the same CC, the same layer and the same TTI. The eNB may be configured to implement a control, of the above-described embodiments, with respect to the user terminal from which the terminal capability information has been notified.

### (Radio Communication System)

The following description concerns the configuration of a radio communication system according to an embodiment of the present invention. In this radio communication system, a radio communication method is adopted to which the above-described embodiments (including the modified embodiments) are applied. Furthermore, each radio communication method can be applied independently, or in combination.

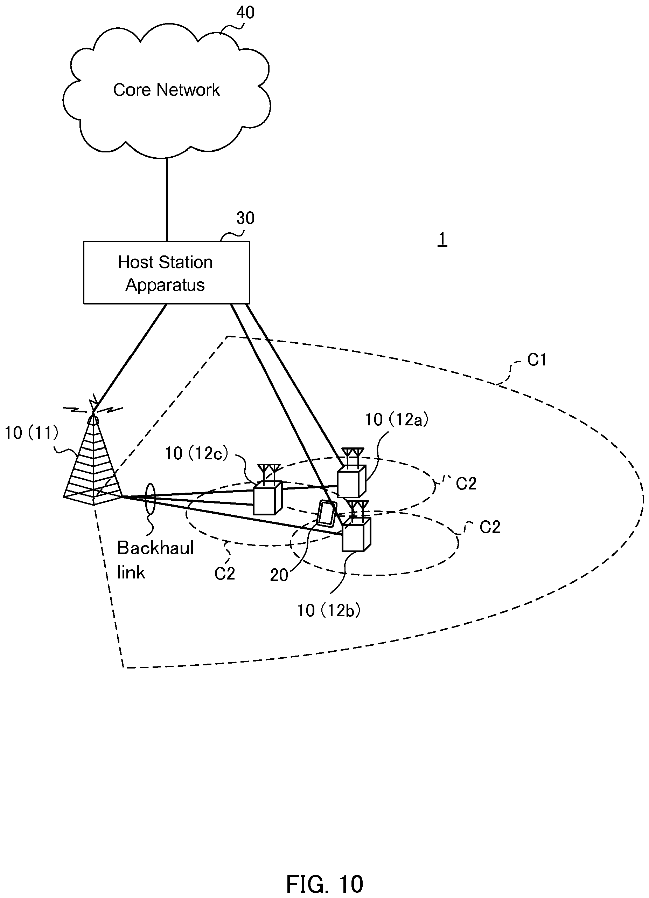

FIG. 10 shows an example of a schematic configuration of the radio communication system according to an embodiment of the present invention. The radio communication system 1 can apply carrier aggregation (CA) and/or dual connectivity (DC), which are an integration of a plurality of fundamental frequency blocks (component carriers), having the system bandwidth (e.g., 20MHz) as 1 unit. Note that this radio communication system may also be called SUPER 3G, LTE-A (LTE-Advanced), IMT-Advanced, 4G, 5G, or FRA (Future Radio Access), etc.

The radio communication system 1 shown in FIG. 10 includes a radio base station 11 which forms a macro cell C1 having a relative wide coverage, and a radio base station 12 (12a through 12c) provided within the macro cell C1 and forming a small cell C2 that is smaller than the macro cell C1. Furthermore, a user terminal 20 is provided within the macro cell C1 and each small cell C2.

The user terminal 20 can connect both to the radio base station 11 and the radio base station 12. It is assumed that the user terminal 20 concurrently uses the macro cell C1 and the small cells C2 via CA or DC. Furthermore, the user terminal 20 can apply CA or DC using a plurality of cells (CCs) (e.g., five or less CCs, or six or more CCs).

Communication between the user terminal 20 and the radio base station 11 can be carried out using a carrier (called an "existing carrier", "Legacy carrier", etc.) having a narrow bandwidth in a relatively low frequency band (e.g., 2GHz). Whereas, communication between the user terminal 20 and the radio base station 12 may be carried out using a carrier having a wide bandwidth in a relative high frequency band (e.g., 3.5GHz, 5GHz, etc.), or using the same carrier as that with the radio base station 11. Note that the configuration of the frequency used by the radio base stations is not limited to the above.

A fixed-line connection (e.g., optical fiber, or X2 interface, etc., compliant with CPRI (Common Public Radio Interface)) or a wireless connection can be configured between the radio base station 11 and the radio base station 12 (or between two radio base stations 12).

The radio base station 11 and each radio base station 12 are connected to a host station apparatus 30, and are connected to the core network 40 via the host station apparatus 30. The host station apparatus 30 includes, but is not limited to, an access gateway apparatus, a radio network controller (RNC), and a mobility management entity (MME), etc. Furthermore, each radio base station 12 may be connected to the host station apparatus 30 via the radio base station 11.

Note that the radio base station 11 is a radio base station having a relatively wide coverage, and may be called a macro base station, an aggregation node, eNB (eNodeB) or a transmission/reception point. Furthermore, the radio base station 12 is a radio base station having local coverage, and may be called a small base station, a micro base station, a pico base station, a femto base station, HeNB (Home eNodeB), RRH (Remote Radio Head), or a transmission/reception point, etc. Hereinafter, the radio base stations 11 and 12 will be generally referred to as "a radio base station 10" in the case where they are not distinguished.

Each user terminal 20 is compatible with each kind of communication scheme such as LTE, LTE-A, etc., and also includes a fixed communication terminal in addition to a mobile communication terminal.

In the radio communication system 1, OFDMA (Orthogonal Frequency Division Multiple Access) is applied to the downlink and SC-FDMA (Single-Carrier Frequency Division Multiple Access) is applied to the uplink as radio access schemes. OFDMA is a multi-carrier transmission scheme for performing communication by dividing a frequency band into a plurality of narrow frequency bands (subcarriers) and mapping data to each subcarrier. SC-FDMA is a single carrier transmission scheme to reduce interference between terminals by dividing, per terminal, the system bandwidth into bands formed with one or continuous resource blocks, and allowing a plurality of terminals to use mutually different bands. Note that the uplink and downlink radio access schemes are not limited to these combinations.

In the radio communication system 1, a downlink shared channel (PDSCH: Physical Downlink Shared Channel) that is shared by each user terminal 20, a broadcast channel (PBCH: Physical Broadcast channel), and an L1/L2 control channel, etc., are used as downlink channels. User data and higher layer control information, and an SIB (System Information Block) are transmitted on the PDSCH. Furthermore, an MIB (Master Information Block), etc., is transmitted on the PBCH.

The downlink L1/L2 control channel includes a PDCCH (Physical Downlink Control Channel), an EPDCCH (Enhanced Physical Downlink Control Channel), a PCFICH (Physical Control Format Indicator Channel), and a PHICH (Physical Hybrid-ARQ Indicator Channel), etc. Downlink control information (DCI), etc., which includes PDSCH and PUSCH scheduling information, is transmitted by the PDCCH. The number of OFDM symbols used in the PDCCH is transmitted by the PCFICH. A HARQ delivery acknowledgement signal (ACK/NACK) for the PUSCH is transmitted by the PHICH. An EPDCCH that is frequency-division-multiplexed with a PDSCH (downlink shared data channel) can be used for transmitting the DCI in the same manner as the PDCCH.

In the radio communication system 1, an uplink shared channel (PUSCH: Physical Uplink Shared Channel) that is shared by each user terminal 20, an uplink control channel (PUCCH: Physical Uplink Control Channel), and a random access channel (PRACH: Physical Random Access Channel), etc., are used as uplink channels. The PUSCH is used to transmit user data and higher layer control information. Downlink radio quality information (CQI: Channel Quality Indicator) and delivery acknowledgement information (ACK/NACK), etc., are transmitted via the PUCCH. A random access preamble for establishing a connection with a cell is transmitted by the PRACH.

In the radio communication system 1, a cell-specific reference signal (CRS), channel state information reference signal (CSI-RS) and a demodulation reference signal (DMRS), etc., are transmitted as downlink reference signals. Furthermore, in the radio communication system 1, a measurement reference signal (SRS: Sounding Reference Signal) and a demodulation reference signal (DMRS), etc., are transmitted as uplink reference signals. Note that the DMRS may be referred to as a user terminal specific reference signal (UE-specific reference signal). Furthermore, the transmitted reference signals are not limit to the above.

### <Radio Base Station>

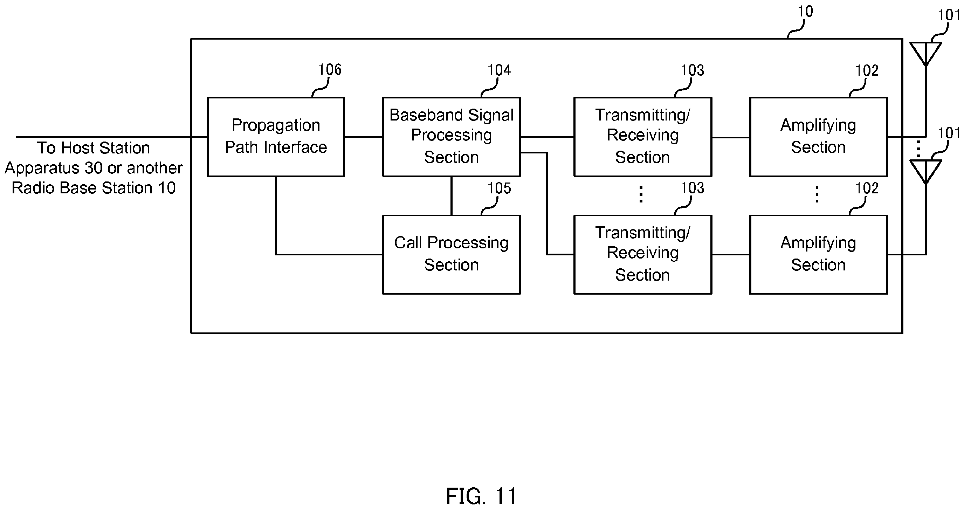

FIG. 11 is a diagram illustrating an overall configuration of the radio base station according to an embodiment of the present invention. The radio base station 10 is configured of a plurality of transmission/reception antennas 101, amplifying sections 102, transmitting/receiving sections 103, a baseband signal processing section 104, a call processing section 105 and a transmission path interface 106. Note that the transmission/reception antennas 101, the amplifying sections 102, and the transmitting/receiving sections 103 may be configured to include one or more thereof, respectively.

User data that is to be transmitted on the downlink from the radio base station 10 to the user terminal 20 is input from the host station apparatus 30, via the transmission path interface 106, into the baseband signal processing section 104.

In the baseband signal processing section 104, in regard to the user data, signals are subjected to PDCP (Packet Data Convergence Protocol) layer processing, RLC (Radio Link Control) layer transmission processing such as division and coupling of user data and RLC retransmission control transmission processing, MAC (Medium Access Control) retransmission control (e.g., HARQ (Hybrid Automatic Repeat reQuest) transmission processing), scheduling, transport format selection, channel coding, inverse fast Fourier transform (IFFT) processing, and precoding processing, and resultant signals are transferred to the transmission/reception sections 103. Furthermore, in regard to downlink control signals, transmission processing is performed, including channel coding and inverse fast Fourier transform, and resultant signals are also transferred to the transmission/reception sections 103.

Each transmitting/receiving section 103 converts the baseband signals, output from the baseband signal processing section 104 after being precoded per each antenna, to a radio frequency band and transmits this radio frequency band. The radio frequency signals that are subject to frequency conversion by the transmitting/receiving sections 103 are amplified by the amplifying sections 102, and are transmitted from the transmission/reception antennas 101. Based on common recognition in the field of the art pertaining to the present invention, each transmitting/receiving section 103 can be configured as a transmitter/receiver, a transmitter/receiver circuit or a transmitter/receiver device. Note that each transmitting/receiving section 103 may be configured as an integral transmitting/receiving section or may be configured as a transmitting section and a receiving section.

Whereas, in regard to the uplink signals, radio frequency signals received by each transmission/reception antenna 101 are amplified by each amplifying section 102. The transmitting/receiving sections 103 receive the uplink signals that are amplified by the amplifying sections 102, respectively. The transmitting/receiving sections 103 frequency-convert the received signals into baseband signals and the converted signals are then output to the baseband signal processing section 104.

The baseband signal processing section 104 performs FFT (Fast Fourier Transform) processing, IDFT (Inverse Discrete Fourier Transform) processing, error correction decoding, MAC retransmission control reception processing, and RLC layer and PDCP layer reception processing on user data included in the input uplink signals. The signals are then transferred to the host station apparatus 30 via the transmission path interface 106. The call processing section 105 performs call processing such as releasing a communication channel, manages the state of the radio base station 10, and manages the radio resources.

The transmission path interface 106 performs transmission and reception of signals with the host station apparatus 30 via a predetermined interface. Furthermore, the transmission path interface 106 can perform transmission and reception of signals (backhaul signaling) with another radio base station 10 via an inter-base-station interface (for example, optical fiber or X2 interface compliant with CPRI (Common Public Radio Interface)).

Note that each of the transmitting/receiving sections 103 transmits a DCI in regard to the transmission and/or reception of a plurality of TBs to the user terminal 20. The plurality of TBs correspond to, e.g., TBs that are allocated in the same CC, the same layer and the same TTI. Each of the transmitting/receiving sections 103 may transmit a plurality of DCIs which include information corresponding to respectively different TBs, or may transmit one DCI which includes a plurality of information corresponding to respectively different TBs.

Each of the transmitting/receiving sections 103 may transmit instruction information (DL assignment) for reception of a downlink shared channel (PDSCH) corresponding to a plurality of TBs. Furthermore, each of the transmitting/receiving sections 103 may transmit instruction information (UL grant) for transmission of an uplink shared channel (PUSCH) corresponding to a plurality of TBs. In other words, each of the transmitting/receiving sections 103 can transmit one or a plurality of DCIs which schedule a plurality of PDSCHs/PUSCHs that are allocated in the same CC, the same layer and the same TTI.

Each of the transmitting/receiving sections 103 may transmit a plurality of TBs (PDSCHs) that are allocated in the above-described DCI(s). Furthermore, each of the transmitting/receiving sections 103 may transmit an HARQ-ACK for a plurality of TBs (PUSCHs) that are allocated by the DCI(s).

Each of the transmitting/receiving sections 103 may transmit a notification that a plurality of TBs are to be transmitted and/or received in a predetermined CC, layer and subframe. Furthermore, setting information necessary for such transmission and/or reception may also be transmitted.

Each of the transmitting/receiving sections 103 may notify information regarding a priority for a predetermined TB, information regarding resource mapping rules for a predetermined TB (e.g., TTI length, number of subcarriers, etc.), information regarding a PUCCH resource for a predetermined TB (e.g., an HARQ PUCCH resource), and information regarding a TB index of a predetermined TB.

Furthermore, each of the transmitting/receiving sections 103 receives a plurality of TBs that are transmitted based on the above-described DCI from the user terminal 20. Each of the transmitting/receiving sections 103 may receive an HARQ-ACK for a plurality of TBs (PDSCHs) that are transmitted based on the DCI. Each of the transmitting/receiving sections 103 may receive a PHR.

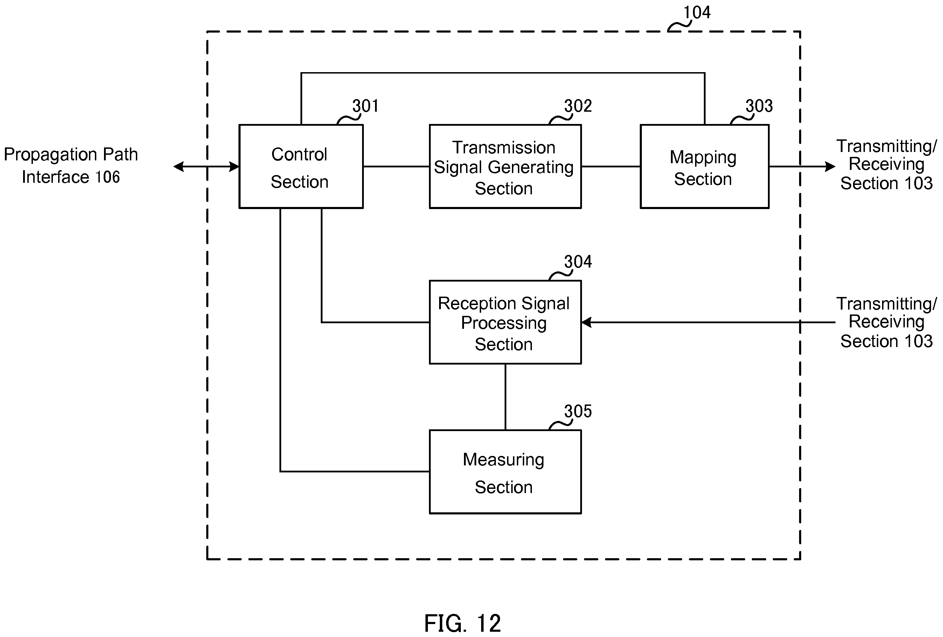

FIG. 12 is a diagram illustrating the functional configurations of the radio base station according to the present embodiment. Note that although FIG. 12 mainly shows functional blocks of the features of the present embodiment, the radio base station 10 is also provided with other functional blocks that are necessary for carrying out radio communication. As illustrated in FIG. 12, the baseband signal processing section 104 is provided with at least a control section (scheduler) 301, a transmission signal generating section 302, a mapping section 303, a reception signal processing section 304, and a measuring section 305.

The control section (scheduler) 301 performs the entire control of the radio base station 10. Based on common recognition in the field of the art pertaining to the present invention, the control section 301 can be configured as a controller, a control circuit or a control device.

The control section 301 controls, e.g., the generation of signals by the transmission signal generating section 302, and the allocation of signals by the mapping section 303. Furthermore, the control section 301 controls the reception processes of signals by the reception signal processing section 304, and the measurement of signals by the measuring section 305.

The control section 301 controls the scheduling (e.g., resource allocation) of the system information, downlink data signals transmitted by a PDSCH, and downlink control signals transmitted by a PDCCH and/or EPDCCH. Furthermore, control of scheduling of downlink reference signals such as synchronization signals (PSS (Primary Synchronization Signal)/SSS (Secondary Synchronization Signal), CRSs, CSI-RSs, DMRSs, etc., is carried out.

Furthermore, the control section 301 controls the scheduling of the uplink data signals transmitted in a PUSCH, the uplink control signals transmitted by a PUCCH and/or a PUSCH (e.g., delivery acknowledgment signal (HARQ-ACK)), a random access preamble transmitted by a PRACH, and an uplink reference signal, etc.

Specifically, the control section 301 performs a control to transmit and/or receive a plurality of TBs in which at least one of a CC, a layer and a TTI is the same. For example, the plurality of TBs may have at least two of a CC, a layer and a TTI that is the same, or all of the CC, the layer and the TTI may be the same for the plurality of TBs. The control section 301 may apply the same resource mapping rules to the plurality TBs, or may apply different resource mapping rules to the plurality of TBs.

In the case where a predetermined condition(s) is satisfied, the control section 301 may perform a control to preferentially (e.g., by maintaining a resource and/or a transmission power) allocate a TB having a higher priority. Furthermore, the control section 301 may perform a control to drop, puncture or rate match a TB having a lower priority.

The control section 301 controls the scheduling of PDSCHs/PUSCHs that correspond to the plurality of TBs, and controls the transmission signal generating section 302 and the mapping section 303 to transmit instruction information (DCI(s)), for instructing radio resources to use each PDSCH/PUSCH, to a predetermined user terminal 20 using a PDCCH/EPDCCH. Furthermore, the control section 301 controls the reception signal processing section 304 to monitor the PUSCH resources corresponding to the plurality of TBs notified by the DCI(s).

The control section 301 may perform a control to transmit a plurality of DCIs that include information corresponding to each different TB (first embodiment), or may perform a control to transmit one DCI that includes a plurality of information corresponding to each different TB (second embodiment). The control section 301 may perform a control to mask the plurality of DCIs with separate (different) RNTIs, perform a control to have separate (different) payload sizes, or may perform a control to include a field that indicates a TB to be subject to scheduling.

Furthermore, the control section 301 may perform a control to carry out an HARQ process for each TB of the plurality of TBs (third and fourth embodiments). For example, the control section 301 can separately manage each HARQ process of the TBs. Upon obtaining an HARQ-ACK for a predetermined TB of the user terminal 20 from the reception signal processing section 304, the control section 301 determines whether or not retransmission of downlink data for the predetermined TB is necessary, and carries out a retransmission process if the control section 301 determines it to be necessary (third embodiment). Furthermore, the control section 301 may perform a control to transmit retransmission of uplink data/new data instructions for each TB on either a PHICH or a PDCCH/EPDDCH (fourth embodiment).

Furthermore, the control section 301 controls the uplink transmission power for each TB of the plurality of TBs (fifth embodiment). For example, the control section 301 can perform a control to separately generate a TPC command for each TB, and notify the user terminal 20 thereof including a DCI for use in scheduling.

Furthermore, in the case where a PHR is input from the reception signal processing section 304, the control section 301 performs a power control for each TB based on the PHR. For example, the control section 301 may perform a control to determine that the PHR is calculated based on one TB, calculate an excess transmission power of a predetermined user terminal 20 from the PHR, and control the uplink transmission power of the TB and/or another TB that is transmitted in the same TTI as the TB.

Furthermore, the control section 301 may perform a control to notify the user terminal 20 of a notification that a plurality of TBs are to be transmitted and/or received in a predetermined CC, layer and subframe, setting information necessary for such transmission and/or reception, information related to a priority for a predetermined TB, information related to resource mapping rules for a predetermined TB, information related to a PUCCH resource for a predetermined TB, and information related to a TB index of a predetermined TB, etc., by using higher layer signaling (e.g., RRC signaling), a DCI(s) or a combination thereof.

The transmission signal generating section 302 generates a downlink signal (a downlink control signal, a downlink data signal, or a downlink reference signal, etc.) based on instructions from the control section 301, and outputs the generated signal to the mapping section 303. Based on common recognition in the field of the art pertaining to the present invention, the downlink control signal generating section 302 can be configured as a signal generator or a signal generating circuit.

The transmission signal generating section 302 generates, based on instructions form the control section 301, a DL assignment that notifies allocation information of a downlink signal and a UL grant that notifies allocation information of an uplink signal. Furthermore, an encoding process and a modulation process are carried out on the downlink data signal in accordance with a coding rate and modulation scheme that are determined based on channel state information (CSI), etc., that is notified from each user terminal 20.

Based on instructions from the control section 301, the mapping section 303 maps the downlink signal generated in the transmission signal generating section 302 to a predetermined radio resource(s) to output to the transmitting/receiving sections 103. Based on common recognition in the field of the art pertaining to the present invention, the mapping section 303 can be configured as a mapper, a mapping circuit and a mapping device.

The reception signal processing section 304 performs a receiving process (e.g., demapping, demodulation, and decoding, etc.) on a reception signal input from the transmitting/receiving section 103. The reception signal can be, for example, an uplink signal (uplink control signal, uplink data signal, uplink reference signal, etc.) transmitted from the user terminal 20. Based on common recognition in the field of the art pertaining to the present invention, the reception signal processing section 304 can be configured as a signal processor, a signal processing circuit, or a signal processing device.

The reception signal processing section 304 outputs information that is encoded by the reception process to the control section 301. For example, in the case where a PUCCH including an HARQ-ACK is received, the HARQ-ACK is output to the control section 301. Furthermore, the reception signal processing section 304 outputs a reception signal or a reception-processed signal to the measuring section 305.

The measuring section 305 carries out a measurement on the received signal. Based on common recognition in the field of the art pertaining to the present invention, the measuring section 305 can be configured as a measurer, a measuring circuit or a measuring device.

The measuring section 305 may measure, e.g., the reception power of the received signal (e.g., RSRP (Reference Signal Received Power)), the reception quality (e.g., RSRQ (Reference Signal Received Quality)), and the channel quality, etc. The measurement results may be output to the control section 301.

### <User Terminal>

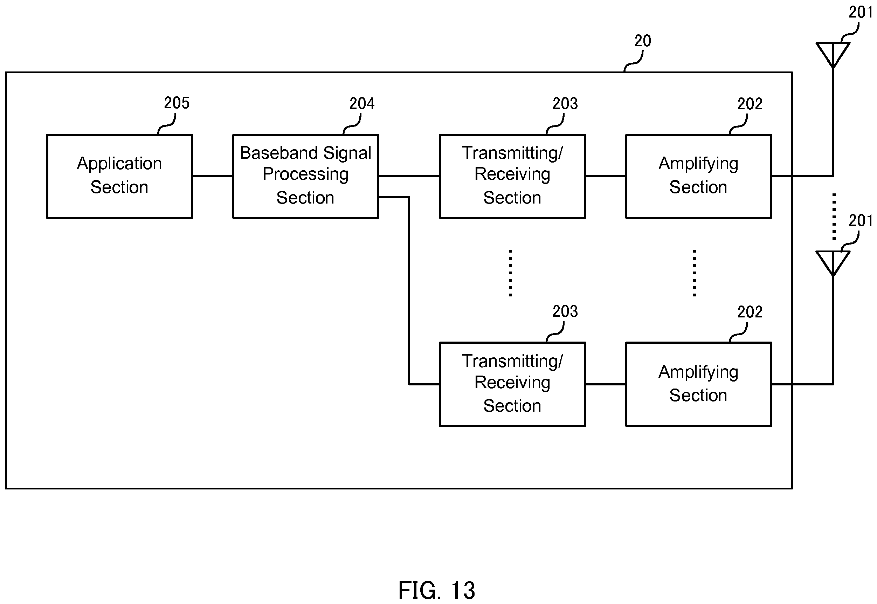

FIG. 13 is a diagram showing an illustrative example of an overall structure of a user terminal according to the present embodiment. The user terminal 20 is provided with a plurality of transmitting/receiving antennas 201, amplifying sections 202, transmitting/receiving sections 203, a baseband signal processing section 204 and an application section 205. Note that each of the transmitting/receiving antennas 201, the amplifying sections 202, and the transmitting/receiving sections 203 only need to be configured of one of more thereof, respectively.

Radio frequency signals that are received in the transmitting/receiving antennas 201 are respectively amplified in the amplifying sections 202. Each transmitting/receiving section 203 receives a downlink signal that has been amplified by an associated amplifying section 202. The transmitting/receiving sections 203 perform frequency conversion on the reception signals to convert into baseband signals, and are thereafter output to the baseband signal processing section 204. Based on common recognition in the field of the art pertaining to the present invention, each transmitting/receiving section 203 can be configured as a transmitter/receiver, a transmitter/receiver circuit or a transmitter/receiver device. Note that each transmitting/receiving sections 203 can be configured as an integral transmitting/receiving section, or can be configured as a transmitting section and a receiving section.

The input baseband signal is subjected to an FFT process, error correction decoding, a retransmission control receiving process, etc., in the baseband signal processing section 204. The downlink user data is forwarded to the application section 205. The application section 205 performs processes related to higher layers above the physical layer and the MAC layer. Furthermore, out of the downlink data, broadcast information is also forwarded to the application section 205.

On the other hand, uplink user data is input to the baseband signal processing section 204 from the application section 205. In the baseband signal processing section 204, a retransmission control transmission process (e.g., a HARQ transmission process), channel coding, precoding, a discrete fourier transform (DFT) process, an inverse fast fourier transform (IFFT) process, etc., are performed, and the result is forwarded to each transmitting/receiving section 203. The baseband signal that is output from the baseband signal processing section 204 is converted into a radio frequency band in the transmitting/receiving sections 203. Thereafter, the amplifying sections 202 amplify the radio frequency signal having been subjected to frequency conversion, and transmit the resulting signal from the transmitting/receiving antennas 201.

Furthermore, the transmitting/receiving sections 203 transmit a plurality of TBs to the radio base station 10. The transmitting/receiving sections 203 may transmit an HARQ-ACK for the plurality of TBs (PDSCHs) that are transmitted based on the DCI. The transmitting/receiving sections 203 may transmit a PHR.

The transmitting/receiving sections 203 receive a DCI(s) in regard to the transmission and/or reception of the plurality of TBs from the radio base station 10. The transmitting/receiving sections 203 may receive a plurality of DCIs that include information corresponding to each different TB, or may receive one DCI that includes a plurality of information corresponding to each different TB.

The transmitting/receiving sections 203 may receive instruction information (DL assignment) for reception of a downlink shared channel (PDSCH) corresponding to the plurality of TBs. Furthermore, the transmitting/receiving sections 203 may receive instruction information (UL grant) for transmission of an uplink shared channel (PUSCH) corresponding to the plurality of TBs. In other words, the transmitting/receiving sections 203 can receive one or two DCIs for scheduling a plurality PDSCHs/PUSCHs that are allocated in the same CC, the same layer and the same TTI.

The transmitting/receiving sections 203 may receive a plurality of TBs (PDSCHs). Furthermore, each of the transmitting/receiving sections 203 may receive an HARQ-ACK for a plurality of TBs (PDSCHs).

The transmitting/receiving sections 203 may receive notification that a plurality of TBs are transmitted and/or received in a predetermined CC, layer and subframe. Furthermore, the transmitting/receiving sections 203 may receive setting information necessary for such transmission and/or reception.

The transmitting/receiving sections 203 may receive information regarding the priority of a predetermined TB, information, information regarding resource mapping rules for a predetermined TB, information regarding a PUCCH resource for a predetermined TB, and information regarding a TB index of a predetermined TB.

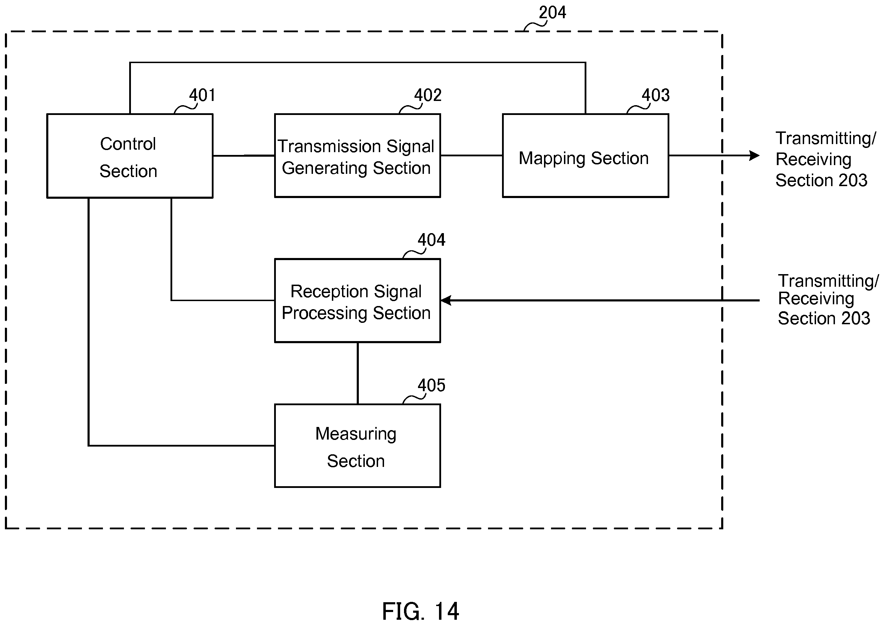

FIG. 14 is a diagram illustrating the functional configurations of the user terminal according to the present embodiment. Note that FIG. 14 mainly shows functional blocks of the features of the present embodiment; the user terminal 20 is also provided with other functional blocks that are necessary for carrying out radio communication. As illustrated in FIG. 14, the baseband signal processing section 204 provided in the user terminal 20 includes a control section 401, a transmission signal generating section 402, a mapping section 403, a reception signal processing section 404, and a measuring section 405.

The control section 401 carries out the control of the entire user terminal 20. Based on common recognition in the field of the art pertaining to the present invention, the control section 401 can be configured as a controller, a control circuit or a control device.

The control section 401 controls, e.g., the generation of signals by the transmission signal generating section 402, and the allocation of signals by the mapping section 403. Furthermore, the control section 401 controls the reception processes of signals by the reception signal processing section 404, and the measurement of signals by the measuring section 405.

The control section 401 obtains a downlink control signal (a signal transmitted on a PDCCH/EPDCCH) transmitted from the radio base station 10 and a downlink data signal (a signal transmitted on a PDSCH) from the reception signal processing section 404. The control section 401 controls the generation of an uplink control signal (e.g., a delivery acknowledgement signal (HARQ-ACK) etc.) and the generation of an uplink data signal based on a determination result on whether or not a retransmission control is necessary for the downlink control signal and the downlink data signal.

Specifically, the control section 401 controls the transmission and/or reception of a plurality of TBs in at least one of the same CC, the same layer and the same TTI based on the DCI obtained from the reception signal processing section 404. For example, the plurality of TBs may have at least two of a CC, a layer and a TTI that is the same, or all of the CC, the layer and the TTI may be the same for the plurality of TBs. The control section 401 may apply the same resource mapping rules to the plurality TBs, or may apply different resource mapping rules to the plurality of TBs.

In the case where a predetermined condition(s) is satisfied, the control section 401 may perform a control to preferentially (e.g., by maintaining a resource and/or a transmission power) allocate a TB having a higher priority. Furthermore, the control section 401 may perform a control to drop, puncture or rate match a TB having a lower priority.

The control section 401 may control the reception signal processing section 404 to decode a plurality of DCIs (DCI format). Note that the control section 401 may determine a TB to be scheduled based on a predetermined field included in a DCI.

Furthermore, in the case where the control section 401 obtains, from the reception signal processing section 404, a notification that a plurality of TBs are to be transmitted and/or received in a predetermined CC, layer and subframe, and setting information necessary for such transmission and/or reception, the control section 401 may determine to carry out at least one of the above-described embodiments based on such information.

Furthermore, the control section 401 may perform a control to carry out an HARQ process for each TB of the plurality of TBs (third and fourth embodiments). For example, the control section 401 can separately manage each HARQ process of the TBs. The control section 401 performs a control to generate an HARQ-ACK for each TB and feedback using a PUCCH/PUSCH (third embodiment). Furthermore, upon obtaining a retransmission of uplink data/new data instructions for a predetermined TB from the reception signal processing section 404, the control section 401 may control a retransmission process on uplink data for the predetermined TB (fourth embodiment).

Furthermore, the control section 401 controls the uplink transmission power for each TB of the plurality of TBs (fifth embodiment). For example, the control section 401 can perform a control to separately obtain a TPC command for each TB from the reception signal processing section 40, and apply a transmission power control for each TB.

Furthermore, the control section 401 may calculate a PHR, which is reported to the radio base station 10, based on one TB, two or more TBs, or all of the TBs. The control section 401 can determine a TB to be used in the calculation of the PHR based on at least one of the size of the TB, the amount of transmission power of the TB or the type of TB.

Furthermore, in the case where the control section 401 obtains information related to a priority for a predetermined TB, information related to resource mapping rules for a predetermined TB, and information related to a PUCCH resource for a predetermined TB from the reception signal processing section 404, the control section 401 may renew such information to be used thereafter.

Furthermore, the transmission signal generating section 402 generates an uplink data signal (an uplink control signal, an uplink data signal, and an uplink reference signal, etc.) based on instructions from the control section 401, and outputs the uplink data signal to the mapping section 403. Based on common recognition in the field of the art pertaining to the present invention, the transmission signal generating section 402 can correspond to a signal generator, a signal generating circuit, or a signal generating device.

For example, the transmission signal generating section 402 generates an uplink control signal of a delivery acknowledgement signal (HARQ-ACK) or channel state information (CSI), etc., based on instructions from the control section 401. Furthermore, the transmission signal generating section 402 generates an uplink data signal based on instructions from the control section 401. For example, in the case where a UL grant is included in a downlink control signal notified by the radio base station 10, the transmission signal generating section 402 is instructed by the control section 401 to generate an uplink data signal.

The mapping section 403 maps the uplink signal generated by the transmission signal generating section 402, based on instructions from the control section 401, to radio resources and outputs the generated signal to the transmitting/receiving sections 203. Based on common recognition in the field of the art pertaining to the present invention, the mapping section 403 can be configured as a mapper, a mapping circuit or a mapping device.

The reception signal processing section 404 performs reception processing (e.g., demapping, demodulation, decoding, etc.) on the reception signal input from the transmitting/receiving sections 203. The reception signal can be, for example, a downlink signal transmitted from the radio base station 10 (downlink control signal, downlink data signal, downlink reference signal, etc.). Based on common recognition in the field of the art pertaining to the present invention, the reception signal processing section 404 can correspond to a signal processor, a signal processing circuit, or a signal processing device; or a measurer, a measuring circuit or a measuring device. Furthermore, the reception signal processing section 404 can be configured as a receiving section pertaining to the present invention.

The reception signal processing section 404 blind decodes a DCI (DCI format) which is used to schedule one or a plurality of TBs based on instructions from the control section 401. For example, the reception signal processing section 404 may carry out a demasking process on the DCI using a predetermined RNTI to decode the DCI, or may assume a predetermined payload size to decode the DCI.

The reception signal processing section 404 outputs information that is decoded by a reception process to the control section 401. The reception signal processing section 404 outputs, e.g., broadcast information, system information, RRC signaling, and the DCI(s) to the control section 401. Furthermore, the reception signal processing section 404 outputs reception signals, and signals subjected to reception processing to the measuring section 405.

The measuring section 405 carries out a measurement on the received signals. Based on common recognition in the field of the art pertaining to the present invention, the measuring section 405 can be configured as a measurer, a measuring circuit or a measuring device.

The measuring section 405 may measure, e.g., the reception power of the received signal (e.g., RSRP), the reception quality (e.g., RSRQ), and the channel quality, etc. The measurement results may be output to the control section 401.

Furthermore, the block diagrams used in the above description of the present embodiment indicate function-based blocks. These functional blocks (configured sections) are implemented via a combination of hardware and software. Furthermore, the implementation of each functional block is not limited to a particular means. In other words, each functional block may be implemented by a single device that is physically connected, or implemented by two or more separate devices connected by a fixed line or wirelessly connected.

For example, some or all of the functions of the radio base station 10 and the user terminal 20 may be implemented by using hardware such as ASICs (Application Specific Integrated Circuits), PLDs (Programmable Logic Devices) and FPGAs (Field Programmable Gate Arrays), etc. Furthermore, the radio base station 10 and the user terminal 20 may be each implemented by a computer device that includes a processor (CPU: Central Processing Unit), a communication interface for connecting to a network, a memory and a computer-readable storage medium that stores a program(s). In other words, the radio communication system and the user terminal, etc., pertaining to the embodiment of the present invention may function as a computer that performs processes of the radio communication method pertaining to the present invention.

The processor and memory, etc., are connected to buses for communication of information. Furthermore, the computer-readable storage medium includes, e.g., a flexible disk, a magnetic-optical disk, ROM (Read Only Memory), EPROM (Erasable Programmable ROM), CD-ROM (Compact Disc-ROM), RAM (Random Access Memory), or a hard disk, etc. Furthermore, a program may be transmitted from a network via electric telecommunication lines. Furthermore, the radio base station 10 and the user terminal 20 may also include an input device such as input keys, and an output device such as a display.

The functional configurations of the radio base station 10 and the user terminal 20 may be implemented using the above-mentioned hardware, may be implemented using software modules that are run by a processor, or may be implemented using a combination of both thereof. The processor controls the entire user terminal by operating an operating system. Furthermore, the processor reads a programs, software modules and data from the storage medium into a memory, and performs the various processes thereof accordingly.

The above-mentioned program only needs to be a program that can perform the operations described in the above embodiment on a computer. For example, the control section 401 of the user terminal 20 may be stored in the memory, and implemented by the processor operating a control program, and the other above-mentioned functional blocks can also be implemented in the same manner.

Furthermore, software and commands, etc., may be transmitted/received via a transmission medium. For example, in the case where software is transmitted from a website, server or other remote source by using fixed-line technology, such as coaxial cable, optical fiber cable, twisted-pair wire and digital subscriber's line (DSL), etc., and/or wireless technology, such as infrared, radio and microwaves, etc., such fixed-line technology and wireless technology are included within the definition of a transmission medium.

Note that technical terms discussed in the present specification and/or technical terms necessary for understanding the present specification may be replaced with technical terms having the same or similar meaning. For example channel and/or symbol may be signals (signaling). Furthermore, a signal may be a message. Furthermore, component carrier (CC) may be called a carrier frequency or cell, etc.

Furthermore, information and parameters, etc., discussed in the present specification may be expressed as absolute values, or as a relative value with respect to a predetermined value, or expressed as other corresponding information. For example, a radio resource may be indicated as an index.

Information and signals, etc., discussed in the present specification may be expressed using any one of various different technologies. For example, data, instructions, commands, information, signals, bits, symbols, chips, etc., that could be referred to throughout the above description may be expressed as voltage, current, electromagnetic waves, a magnetic field or magnetic particles, optical field or photons, or a desired combination thereof.

The above-described aspects/embodiments of the present invention may be used independently, used in combination, or may be used by switching therebetween when being implemented. Furthermore, notification of predetermined information (e.g., notification of "is X") does not need to be explicit, but may be implicitly (e.g., by not notifying the predetermined information) carried out.

Notification of information is not limited to the aspects/embodiments of the present invention, such notification may be carried out via a different method. For example, notification of information may be implemented by physical layer signaling (e.g., DCI (Downlink Control Information), UCI (Uplink Control Information)), higher layer signaling (e.g., RRC (Radio Resource Control) signaling, MAC (Medium Access Control) signaling, broadcast information (MIB (Master Information Block), SIB (System Information Block))), by other signals or a combination thereof. Furthermore, RRC signaling may be called a "RRC message" and may be, e.g., an RRC connection setup (RRCConnectionSetup) message, or an RRC connection reconfiguration (RRCConnectionReconfiguration) message, etc.

The above-described aspects/embodiments of the present invention may be applied to a system that utilizes LTE (Long Term Evolution), LTE-A (LTE-Advanced), SUPER 3G, IMT-Advanced, 4G, 5G, FRA (Future Radio Access), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other suitable systems and/or to an enhanced next-generation system that is based on any of these systems.

The order of processes, sequences and flowcharts, etc., in the above-described aspects/embodiments of the present invention can have a switched order so long no contradictions occur. For example, each method described in the present specification proposes an example of an order of various steps but are not limited to the specified order thereof.

Hereinabove, the present invention has been described in detail by use of the foregoing embodiments. However, it is apparent to those skilled in the art that the present invention should not be limited to the embodiment described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

The disclosure of Japanese Patent Application No. 2015-141243, filed on July 15, 2015, the content of which being incorporated herein by reference in its entirety.

## Claims

1. A user terminal comprising:
a receiving section configured to receive downlink control information (DCI) in regard to transmission and/or reception of a transport block (TB); and
a control section configured to control, based on the DCI, transmission and/or reception of a plurality of TBs in the same CC (Component Carrier), the same layer and the same TTI (Transmission Time Interval).

2. The user terminal according to claim 1, wherein the receiving section detects a plurality of DCIs which include information corresponding to each different TB, and
wherein the control section controls transmission and/or reception of the plurality of TBs based on the plurality of DCIs.

3. The user terminal according to claim 1, wherein the receiving section detects one DCI which includes a plurality of information corresponding to each different TB, and
wherein the control section controls transmission and/or reception of the plurality of TBs based on the one DCI.

4. The user terminal according to any one of claims 1 through 3, wherein the control section determines a resource mapping for the plurality of TBs in accordance with a different rule for each TB.

5. The user terminal according to any one of claims 1 through 4, wherein priorities are set for the plurality of TBs, and
wherein, when a predetermined condition in regard to a resource, transmission power or size of TB is satisfied, the control section performs a control to preferentially transmit and/or receive a TB that has a high priority.

6. The user terminal according to any one of claims 1 through 5, wherein the control section controls an HARQ process for each TB of the plurality of TBs.

7. The user terminal according to any one of claims 1 through 6, wherein, when the control section controls a transmission of the plurality of TBs, the control section controls an uplink transmission power of each TB of the plurality of TBs.

8. The user terminal according to claim 7, wherein the control section performs a control to obtain a PHR (Power Headroom Report) based on one TB, out of the plurality of TBs.

9. A radio base station comprising:
a transmitting section configured to transmit downlink control information (DCI) in regard to transmission and/or reception of a transport block (TB); and
a control section configured to control a plurality of TBs, which are allocated by the DCI, to transmit and/or receive in the same CC (Component Carrier), the same layer and the same TTI (Transmission Time Interval).

10. A radio communication method comprising:
a step of receiving downlink control information (DCI) in regard to transmission and/or reception of a transport block (TB); and
a step of controlling, based on the DCI, transmission and/or reception of a plurality of TBs in the same CC (Component Carrier), the same layer and the same TTI (Transmission Time Interval).
